# EUROPEAN PATENT APPLICATION

(11) **EP 1 736 522 A1**
(43) Date of publication of application: **27.12.2006**
(21) Application number: 05720019.8
(22) Date of filing: 04.03.2005
(51) Int. Cl.: C09K 11/00, C09K 11/08, H05B 33/14

(54) **FIELD-EMISSION PHOSPHOR, ITS MANUFACTURING METHOD, AND FIELD-EMISSION DEVICE**

(30) Priority: 12.03.2004 JP 2004071283; 21.09.2004 JP 2004273735; 29.11.2004 JP 2004344709
(71) Applicant: KABUSHIKI KAISHA TOSHIBA, Tokyo 105-8001 (JP); FUJI PIGMENT CO., LTD., Kawanishi-shi, Hyogo-ken 666-0015 (JP)
(72) Inventor: KUBOTA, Shunichi, Sendai-shi Miyagi 9800813 (JP); ITO, T. c/o Toshiba Corporation Intell. Prop. Div., Tokyo 1058001 (JP); SAKAI, Kazuo, c/o FUJI PIGMENT CO., LTD., Hyogo 6660015 (JP)
(74) Representative: HOFFMANN EITLE
(86) International application number: PCT/JP2005/003747
(87) International publication number: WO 2005/087892

(57) **Abstract**

An electroluminescent phosphor comprising particles of a phosphor and particles of an electron-emitting material not originating from atoms constituting the host material of the phosphor and an activator. The particles of the electron-emitting material is contained inside the phosphor particles or included between the phosphor particles in close contact with the phosphor particles. An electroluminescent element has a light emitting layer containing the electroluminescent phosphor. Another electroluminescent element has a light emitting layer containing particles of a phosphor and particles of an electron-emitting material composed of a conductive compound not originating from the atoms constituting the host material of the phosphor and the activator. The proportion of the electron-emitting material to the light emitting layer is 1-75 weight%. A high-luminous efficiency and high-luminance electroluminescent element can be produced.

## Description

### TECHNICAL FIELD

The present invention relates to an electroluminescent phosphor and its manufacturing method. The present invention also relates to an electroluminescent element using the electroluminescent phosphor.

### BACKGROUND ART

Electroluminescence (EL) is a luminous phenomenon which occurs when an electric field is applied to a substance, and a phosphor (hereinafter referred to as the electroluminescent phosphor) generating such emission of light is being used for a display device or a backlight of a liquid crystal display these years.

As the electroluminescent phosphor, there is known, for example, one having zinc sulfide (ZnS) as a host material, into which copper as an activator and at least one element selected from chlorine, bromine, iodine and aluminum as a coactivator are contained, and which emits blue-green light.

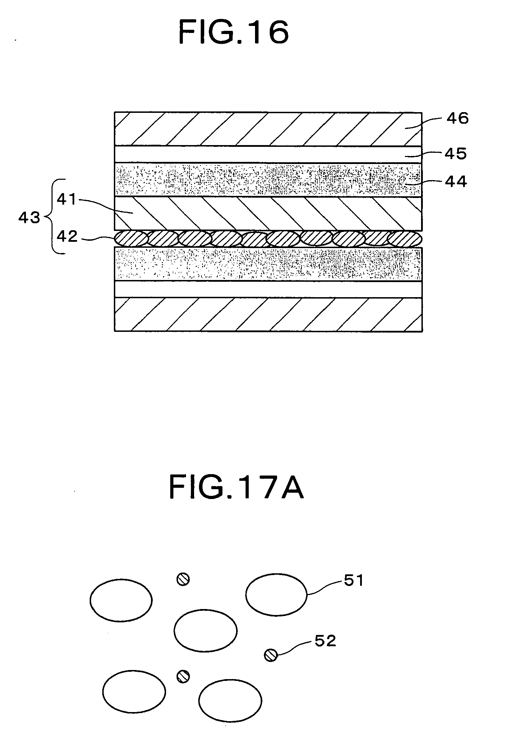

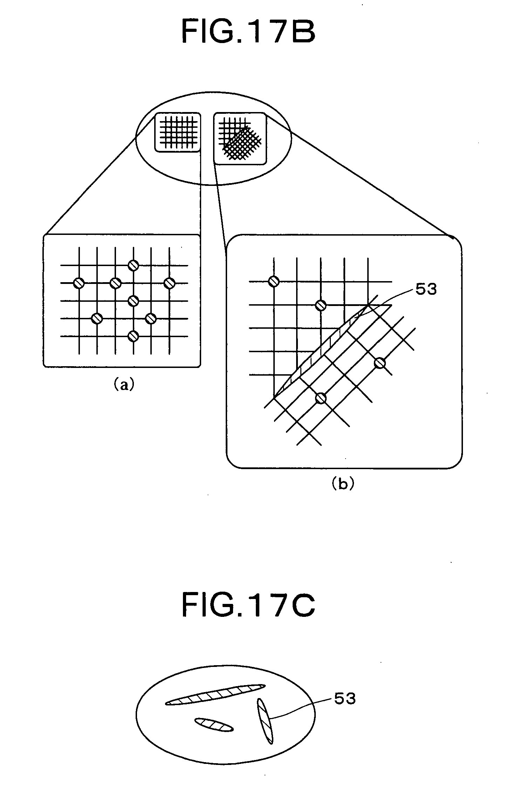

A known method for producing the above electroluminescent phosphor is as follows. As shown in Fig. 17A, ZnS powder 51 which is a host material of a phosphor, a copper-containing compound such as copper acetate, and 52 indicating an alkali metal chloride, an alkaline earth metal chloride or ammonium chloride are mixed as a flux which also serves as a chlorine source. The flux is heated in an inert gas or sulfurizing gas atmosphere at a high temperature of 1000 to 1200°C. Thus, the flux is melted to substitute and introduce Cu and Cl, which are luminescence centers, with and into the Zn and S positions of ZnS as indicated by (a) in a magnified state in Fig. 17B, and ZnS particles are sintered at the same time to grow to have a particle diameter of 25 to 50 µm required for the phosphor. The Cu converted into the Zn position in the above method becomes an acceptor and the Cl becomes a donor. (See, for example, Patent Document 1)

The produced electroluminescent phosphor is mixed and dispersed into a dielectric material such as castor oil to form a light emitting layer, an electrode is disposed at its both ends, and at least one of them is determined as a transparent electrode, thereby forming a dispersion type electroluminescent element. And, an AC voltage having a prescribed voltage and frequency (1000V, 1 kHz) is applied between the electrodes to emit light.

It is assumed that the electroluminescent phosphor emits light according to the following mechanism. As indicated by (b) in a magnified state in Fig. 17B, some Cu not substituted with or introduced into the Zn position are deposited as needle-like Cu₂S (or CuₓS) 53 along a linear or planar lattice defect such as transition, a twin boundary of ZnS crystal. The Cu₂S is a high conductive compound and its electric conductivity is higher than that of ZnS.

Such a phosphor for electroluminescence is different from a phosphor for a CRT and has a large particle diameter of 5-30 µm and a Cu concentration of about 0.1 weight% much larger than that (about 0.01 weight%) of the phosphor for the CRT. A synthesis temperature is higher than a transition temperature of 1020°C of a zinc blende type (low-temperature phase) to a wurtzite type (high-temperature phase) of ZnS, and cubic crystal (zinc blende type) and hexagonal crystal (wurtzite type) are mixed. The Cu₂S is precipitated along a lattice defect such as transition or stacking fault, but such a defect tends to occur on the interface between cubic crystal and hexagonal crystal, so that the above-described phosphor for electroluminescence has a characteristic that a Cu₂S precipitate is formed easily. When observed through a transmission electron microscope, ZnS has twin crystal having the (111) plane of the zinc blende type as boundary surface, and a precipitate of Cu₂S is observed at an end or the like on the boundary surface. The precipitate has a diameter of about 20 to 40 nm.

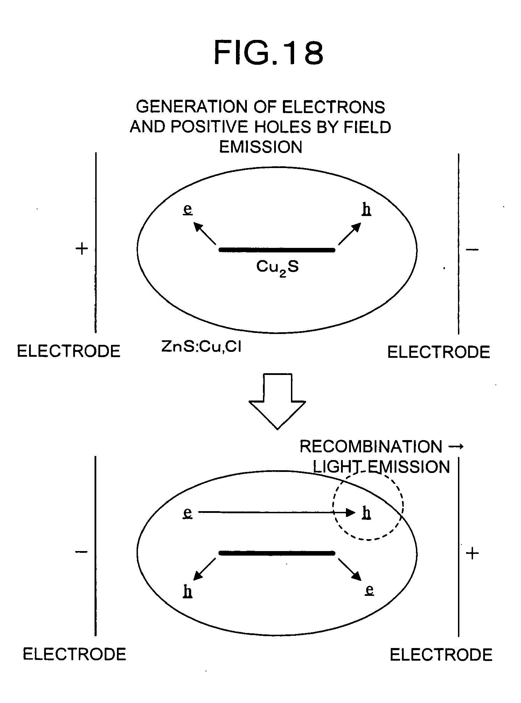

Thus, when a voltage is applied between the electrodes having the phosphor (ZnS:Cu, Cl) including a needle-like precipitate of Cu₂S therebetween as shown in Fig. 18, an electric field is concentrated on a leading end of the Cu₂S precipitate which is a highly conductive compound, electrons are emitted from the leading end on the side near the positive electrode, and positive holes are emitted from the leading end on the side near the negative electrode into the phosphor by the high electric field. In the phosphor, the electrons are caught by a donor level, and the positive holes are caught by an acceptor level. When a voltage polarity changes, the electrons are emitted from the donor level, travel within the phosphor particles, and are recombined with the positive holes near the other leading end to emit light. (See, for example, Non-patent Document 1 and Non-patent Document 2)

However, the conventional electroluminescent phosphor having such an emission mechanism has the deposition of Cu₂S which is a needle-like compound having high conductivity determined indirectly depending on synthesis conditions such as a starting material composition, a baking temperature, a baking time, a baking atmosphere and the like, and the shape, precipitation concentration, distributed state of the precipitate Cu₂S 53 cannot be controlled directly as shown in Fig. 17C. Therefore, it is hard to obtain an electroluminescent phosphor having stable high luminous efficiency.

Because a type of phosphor usable as the phosphor for electroluminescence is limited, selection of luminous efficiency, chromaticity, life and the like for practical use is limited. Besides, the applied voltage and threshold voltage to start the emission of light are high, so that it is required that a driver circuit as a whole has a high voltage resistance. Thus, it has a disadvantage that the cost is high.

An element (hereinafter referred to as the electroluminescent element) having an electroluminescent phosphor as a light emitting layer is roughly divided into two structures of a dispersion type and a thin-film type. For both the structures, a copper-activated zinc sulfide phosphor (ZnS:Cu, Cl) that has, for example, a large amount of copper sulfide (Cu₂S or CuₓS) deposited in the crystal of ZnS which is the host material is used as the electroluminescent phosphor.

The dispersion type electroluminescent element is formed by forming a light emitting layer from a phosphor material which has electroluminescent phosphor particles dispersed into a high dielectric substance (organic binder) such as cyanoethylcellulose and sandwiching the light emitting layer between two electrode layers with an insulating high dielectric layer intervened on at least one surface. And, at least one of the two electrode layers is determined as a transparent electrode layer, and a prescribed AC voltage having a prescribed frequency was applied between the electrode layers to emit light.

The thin-film electroluminescent element has a structure that an ITO transparent electrode layer, a first insulating layer, an electroluminescence layer, a second insulating layer and a backplate metal electrode layer are sequentially laminated on a glass substrate. And, the electroluminescence layer is formed into a thin film having a thickness of the order of 1/10 µm by a method of depositing a manganese-activated zinc sulfide phosphor (ZnS:Mn). An AC voltage of about 100V is applied between the ITO transparent electrode layer and the backplate metal electrode layer, and a high electric field of about 2 × 10⁶V/cm is applied to the electroluminescence layer to emit light. (See, for example, Non-patent Document 3)

But, for a conventional dispersion type electroluminescent element, a usable electroluminescent phosphor is limited to a zinc sulfide type having copper as an activator, and the emission color is limited to green. Therefore, it is hard to commercialize a color (three-color) electroluminescent element.

A range of use is limited because emission luminance is not enough. Specifically, to obtain good luminance, it is necessary to use a phosphor having a large particle diameter of about 30 µm to form a phosphor layer (light emitting layer) having a thickness of 100 µm or more, and usable applications of such a light emitting layer are limited because maximum luminance is low to about 100 cd•m².

Besides, the thin-film electroluminescent element applies a high electric field to a light emitting layer having a thickness of about 0.5 µm, so that light of high luminance can be emitted. But, the thin-film electroluminescence layer is formed by a method such as vapor deposition, so that a type of phosphor film is limited. Therefore, the emission color is limited to orange or the like, and selection for commercialization is limited. There are also problems that a large screen is hard to produce, and the cost is high.
Patent Document 1: Japanese Patent Laid-Open Application Hei 7-216353
Non-patent Document 1: Journal of the Electrochemical Society, 109, 1043-1049 (1962).
Non-patent Document 2: Journal of the Electrochemical Society, 110, 733-748 (1963).
Non-patent Document 3: T. Inoguti, M. Takeda, Y. Kakihara, Y. Nakata and M. Yoshida: '74 SID Intern. Symposium Digest, 84 (1974)

### SUMMARY OF THE INVENTION

The present invention has been made in view of the above circumstances and provides an electroluminescent phosphor having high luminous efficiency, good chromaticity, a long life and the like, a method for manufacturing it, and an electroluminescent element using the electroluminescent phosphor. The invention also provides an electroluminescent element capable of providing a large screen having high luminance with high yield at a low cost. The invention also proposes a device structure capable of making a variety of electron beam excitation phosphors emit light easily and provides an electroluminescent element excelling in mass productivity and capable of providing a large screen at a low cost.

A first aspect of the invention is an electroluminescent phosphor, comprising phosphor particles and electron-emitting material particles, wherein the electron-emitting material particles are not originating from atoms constituting the host material of the phosphor and an activator, and the electron-emitting material particles are contained inside the phosphor particles or included between the phosphor particles in close contact with them.

A second aspect of the invention is a method for manufacturing an electroluminescent phosphor, comprising mixing a phosphor material including elements constituting the host material of a phosphor and an activator or a compound containing the elements and electron-emitting material particles; and baking the prepared mixture by heating to yield an electroluminescent phosphor comprising phosphor particles and the electron-emitting material particles contained in the phosphor particles.

A third aspect of the invention is a method for manufacturing an electroluminescent phosphor, comprising mixing a phosphor material including elements constituting the host material of a phosphor and an activator or a compound containing the elements, and heating for baking the mixture to prepare phosphor particles, mixing the phosphor particles prepared in the previous step with electron-emitting material particles, and baking the mixture prepared in the previous mixing step by heating to produce an electroluminescent phosphor comprising the phosphor particles and the electron-emitting material particles contained in the phosphor particles.

A fourth aspect of the invention is a method for manufacturing an electroluminescent phosphor, comprising mixing a phosphor material including elements constituting a host material of a phosphor and an activator or a compound containing the elements, and heating for baking the mixture to prepare phosphor particles, mixing the phosphor particles prepared in the previous step and electron-emitting material particles, and pressing the mixture prepared in the mixing step at normal temperature or while heating to closely contact the phosphor particles with the electron-emitting material particles included between phosphor particles.

A fifth aspect of the invention is an electroluminescent element, comprising a light emitting layer containing the electroluminescent phosphor according to the first invention.

A sixth aspect of the invention is an electroluminescent element, comprising a light emitting layer including phosphor particles and electron-emitting material particles not originating from atoms constituting the host material of the phosphor and an activator, wherein the electron-emitting material comprises a conductive compound, and a content ratio of the electron-emitting material in the light emitting layer is 1 to 75 weight%.

A seventh aspect of the invention is an electroluminescent element, comprising a light emitting layer, first and second electrode layers which are disposed on both surfaces of the light emitting layer, and an apparatus for applying an electric field between the electrode layers.

The light emitting layer is formed of lamination of a phosphor layer of at least one layer and an electron emission source layer of at least one layer including an electron-emitting material not originating from the atoms constituting the host material of the phosphor and an activator.

In the electroluminescent phosphor of the invention, the electron-emitting material particles not originating from the atoms constituting the host material of the phosphor and the activator are contained inside the phosphor particles or included between the phosphor particles in close contact with them, so that the luminous efficiency can be improved in comparison with the conventional phosphor having Cu₂S formed spontaneously.

The host material of the phosphor is not limited to ZnS, various electron-emitting materials can be selected, and such an electron-emitting material can be included at a high concentration. Therefore, various demands for the device, such as an emission color, luminance, life, cost and the like, can be satisfied, and an electroluminescent phosphor having high luminous efficiency, good chromaticity and a long life can be obtained.

Besides, a high-luminance efficiency and high-luminance dispersion type electroluminescent element can be produced by using this phosphor to form a light emitting layer.

In the electroluminescent element of the invention, the phosphor is not limited to the ZnS-based materials, and the phosphor conventionally considered hard to make it emit light can be made to emit light easily by applying an electric field. And, various demands for the device, such as an emission color, luminance, life, cost and the like, can be satisfied, and the electroluminescent element having a high-luminance efficiency and high-luminance can be produced. Thus, widespread use can be realized. And, the emission layer can be formed by a simple method without using a dry method (vapor-phase deposition method), so that an electroluminescent element having a large area can be produced at a low cost.

### BRIEF DESCRIPTION OF THE DRAWINGS

[FIG. 1A] FIG. 1A is a view schematically showing the structure of an electroluminescent phosphor of a first embodiment.
[FIG. 1B] FIG. 1B is a view schematically showing the structure of an electroluminescent phosphor of the first embodiment.
[FIG. 1C] FIG. 1C is a view schematically showing the structure of an electroluminescent phosphor of the first embodiment.
[FIG. 1D] FIG. 1D is a view schematically showing the structure of an electroluminescent phosphor of the first embodiment.
[FIG. 1E] FIG. 1E is a view schematically showing the structure of an electroluminescent phosphor of the first embodiment.
[FIG. 1F] FIG. 1F is a view schematically showing the structure of an electroluminescent phosphor of the first embodiment.
[FIG. 2] FIG. 2 is a view schematically showing the structure of an electroluminescent phosphor of a second embodiment.
[FIG. 3A] FIG. 3A is a view showing a shape of an electron-emitting material particle used in the first and second embodiments.
[FIG. 3B] FIG. 3B is a view showing a shape of an electron-emitting material particle used in the first and second embodiments.
[FIG. 4] FIG. 4 is a view illustrating a first method of producing the electroluminescent phosphor of the first embodiment.
[FIG. 5] FIG. 5 is a view illustrating a second method of producing the electroluminescent phosphor of the first embodiment.
[FIG. 6] FIG. 6 is a view illustrating a third method of producing the electroluminescent phosphor of the first embodiment.
[FIG. 7] FIG. 7 is a view illustrating another method of producing the electroluminescent phosphor of the first embodiment, in which luminous efficiency is improved.
[FIG. 8] FIG. 8 is a view illustrating a method of producing the electroluminescent phosphor of the second embodiment.
[FIG. 9] FIG. 9 is a perspective sectional view showing a structure of a monochrome dispersion type electroluminescent element of a third embodiment.
[FIG. 10] FIG. 10 is a perspective sectional view showing a structure of a three-color dispersion type electroluminescent element of a fourth embodiment.
[FIG. 11] FIG. 11 is a schematic sectional view showing a structure of a dispersion type electroluminescent element of a fifth embodiment.
[FIG. 12] FIG. 12 is a schematic sectional view showing a structure of a thin-film electroluminescent element of a sixth embodiment. [FIG. 13] FIG. 13 is a schematic sectional view showing a electroluminescent element of a seventh embodiment.
[FIG. 14] FIG. 14 is a view showing characteristics required for the electron-emitting material of the seventh embodiment.
[FIG. 15] FIG. 15 is a sectional view schematically showing a structure of a thin-film electroluminescent element of an eighth embodiment.
[FIG. 16] FIG. 16 is a sectional view schematically showing a structure of a thin-film electroluminescent element of a ninth embodiment.
[FIG. 17A] FIG. 17A is a view illustrating a method of producing a conventional electroluminescent phosphor.
[FIG. 17B] FIG. 17B is a view illustrating the method of producing the conventional electroluminescent phosphor.
[FIG. 17C] FIG. 17C is a view illustrating the method of producing the conventional electroluminescent phosphor.
[FIG. 18] FIG. 18 is a view illustrating an emission mechanism of the conventional electroluminescent phosphor.

### BEST MODE FOR CARRYING OUT THE INVENTION

Embodiments of the invention will be described below with reference to the drawings. It is to be understood that the present invention is not limited to the following embodiments.

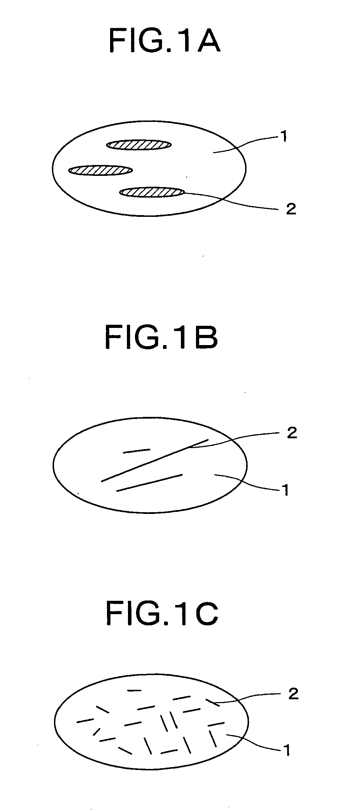

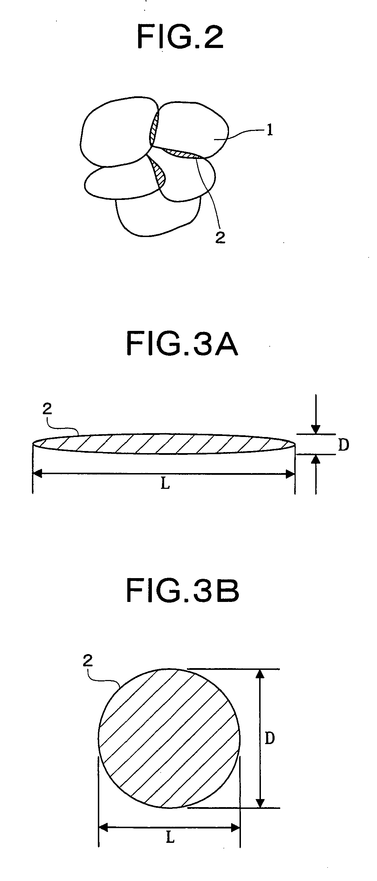

An electroluminescent phosphor of a first embodiment of the invention comprises phosphor particles 1 and electron-emitting material particles 2 as shown in Fig. 1A through Fig. 1F. The electron-emitting material particles 2 are not originating from atoms constituting a host material of the phosphor and an activator, and the electron-emitting material particles 2 are contained inside the phosphor particles 1. An electroluminescent phosphor of a second embodiment has the electron-emitting material particles 2 not originating from the atoms constituting the host material of the phosphor and the activator included between the phosphor particles 1 in close contact with them as shown in Fig. 2.

As the phosphor used in the first and second embodiments, a known phosphor can be used. For example, not only ZnS : Cu having a blue-green emission color but also Y₂O₂S:Eu indicating vivid light emission with high efficiency, Zn₂SiO₄:Mn indicating green emission with high color purity, ZnS:Ag indicating blue emission with high efficiency, or the like can be used to respond to various demands such as an emission color, luminance, life, cost and the like. Phosphors usable in the embodiments are shown in Table 1 together with host materials of phosphors and materials of activators.

**[Table 1]**

| | Raw material of host material of phosphor | Raw material of activator | Phosphor |
|---|---|---|---|
| (1) | ZnO, SiO₂ | MnCO₃ | Zn₂SiO₄:Mn |
| (2) | ZnO, GeO₂ | MnCO₃ | Zn₂GeO₄ :Mn |
| (3) | Y₂O₃ | Eu₂O₃ | Y₂O₃:Eu |
| (4) | ZnS | CuSO₄•5H₂O | ZnS:Cu |
| (5) | ZnS | AgNO₃ | ZnS:Ag |
| (6) | Y₂O₃, S | Eu₂O₃ | Y₂O₂S:Eu |
| (7) | Y₂O₃, SiO₂ | Eu₂O₃ | Y₂SiO₅:Eu |
| (8) | Ga₂O₃ | Eu₂O₃ | Ga₂O₃:Eu |
| (9) | MgO, Ga₂O₃ | Eu₂O₃ | MgGa₂O₄: Eu |

Phosphor particles have a particle diameter (average particle diameter) of 1 nm to 100 µm, and more preferably 100 nm to 30 µm. If the phosphor particles have a particle diameter of exceeding 100 µm, a threshold voltage is increased, and if the particle diameter is less than 1 nm, luminous efficiency decreases considerably.

The electron-emitting material used in the first and second embodiments has an electric resistivity of 10⁷ Ω•cm or less, preferably 10⁴ Ω•cm or less, and more preferably 10⁰ Ω•cm (1 Ω•cm) or less. If the electric resistivity of the electron-emitting material is higher than 10⁷ Ω•cm, satisfactory electron emission capacity is not provided, and the emission of the phosphor cannot be made. It is desirable that the electric resistivity is lower, but the electron emission capacity is highly influenced by the shape of the electron-emitting material particles as described below.

It is desirable that the shape of the electron-emitting material particles 2 has an aspect ratio (L/D), which is a ratio of a major axis (L) and a minor axis (D), of 1.5 or more, and more preferably 2 or more as shown in Fig. 3A. Those having a larger aspect ratio have higher electron emission capacity, but even if the shape is roughly (in appearance) spherical and has an aspect ratio of 1 as shown in Fig. 3B, electrons can be emitted sufficiently from an end or sharp-pointed part of any fine projection or chipped part of about several nanometers of the spherical shape as described later. Besides, it is desirable that the electron-emitting material particles 2 have a particle diameter not larger than that of the above-described phosphor particles 1.

Types and characteristics of the electron-emitting materials usable in the embodiments of the invention are shown in Table 2. It is particularly desirable to use a monolayer or multilayer type carbon nanotube (CNT) as the electron-emitting material particles 2. A variety of metal particles is also suitable but it is particularly desirable to use metal particles of Mo, W, Au, Ag or Pd having a low work function. And, a conductive oxide such as ATO or ITO and a complex conductive oxide such as titanium oxide (TiO₂) coated with such a conductive oxide can also be used.

**[Table 2]**

| No | | Material Name | Properties | | |
|---|---|---|---|---|---|
| | | | Powder resistivity Ω/cm | Shape | Particle diameter etc. (µm) |
| **1** | -(1) | CNT Monolayer type *1 | 0.1 or less | Needle-like (aspect ratio = 10000) | Diameter••0.001 Length••10 |
| | -(2) | Monolayer type | 0.1 or less | Needle-like (aspect ratio = 1000) | Diameter••0.001 Length••1 |
| | -(3) | Monolayer type | 0.1 or less | Needle-like (aspect ratio = 10) | Diameter••0.005 Length••0.05 |
| | -(4) | CNT Multilayer type *2 | 0.1 or less | Needle-like (aspect ratio = 2000) | Diameter••0.005 Length••10 |
| | -(5) | Multilayer type | 0.1 or less | Needle-like (aspect ratio = 200) | Diameter**••**0.05 Length••10 |
| | -(6) | Multilayer type | 0.1 or less | Needle-like (aspect ratio = 20) | Diameter••0.05 Length••1 |
| **2** | -(1) | Needle-like conductive titanium oxide *3 | 2-60 | Needle-like (aspect ratio = 10-25) | Diameter**••**0.2 Length••2-5 |
| | -(3) | Conductive titanium oxide | 2-30 | Spherical | 0.03-0.3 |
| **3** | | Graphite | 1 or less | Needle-like (aspect ratio = 10-25) | Width••0.1-50 Thickness••0.01-10 |
| **4** | -(1) | Ni | 0.1 or less | Scale-like | Width••0.1-50 Thickness**••**0.01-10 |
| | -(2) | Cu | 0.1 or less | Scale-like | Width••0.1-50 Thickness••0.01-10 |
| | -(3) | Al | 0.1 or less | Scale-like | Width**••**0.1-50 Thickness••0.01-10 |
| | -(4) | K₂O·nTiO₂ | 0.1 or less | Scale-like | Width••0.1-50 Thickness••0.01-10 |
| **5** | -(1) | Cu-Al | 0.1 or less | Irregular type | 0.1-50 |
| | -(2) | Mg•A1 | 0.1 or less | Irregular type | 0.1-50 |
| | -(3) | Cr | 0.1 or less | Irregular type | 0.1-50 |
| | -(4) | Co | 0.1 or less | Irregular type | 0.1-50 |
| **6** | -(1) | ATO | 0.1 or less | Spherical | 0.01-10 |
| | -(2) | ITO | 0.1 or less | Spherical | 0.01-10 |
| | -(3) | ZnO | 0.1 or less | Spherical | 0.01-10 |
| | -(4) | MgIn₂O₃ | 0.1 or less | Spherical | 0.01-10 |
| | -(5) | CdGa₂O₄ | 0.1 or less | Spherical | 0.01-10 |
| | -(6) | Cu·Sn | 0.1 or less | Spherical | 0.01-10 |
| | -(7) | Zn | 0.1 or less | Spherical | 0.01-10 |
| | -(8) | Ag | 0.1 or less | Spherical | 0.01-10 |
| | - (9) | W | 0.1 or less | Spherical | 0.01-10 |
| | -(10) | Sb | 0.1 or less | Spherical | 0.01-10 |
| | - (11) | Au | 0.1 or less | Spherical | 0.01-10 |
| | -(12) | Mo | 0.1 or less | Spherical | 0.01-10 |

| | | | | | |
|---|---|---|---|---|---|
| *1 Hollow tube with monoatomic layer formed into a cylindrical shape with ends closed. (1-5 nm × 100 µm Max) *2 Hollow tube having several dozen graphite layers laminated. (4-50 nm × several dozen µm) Having Sb-doped SnO₂ coated on *3 surface | | | | | |

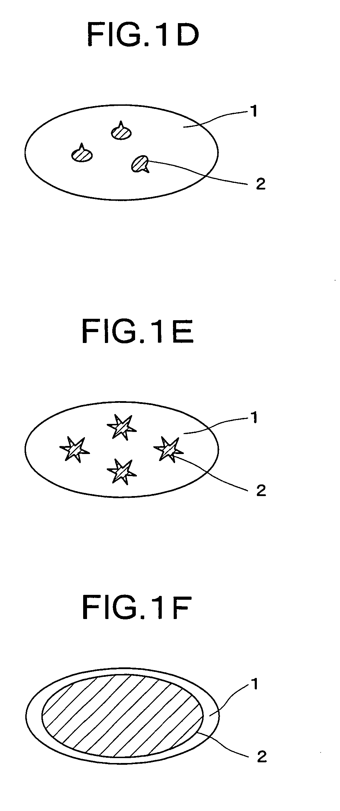

In addition to the structure shown in Fig. 1A, the electroluminescent phosphor of the first embodiment can have a variety of structures as shown in Fig. 1B through Fig. 1F by combining the phosphor particles 1 and the electron-emitting material particles 2. Fig. 1B shows a structure that needle-like electron-emitting material particles 2 having a particularly large aspect ratio are contained inside the phosphor particles 1 in a dispersed form, Fig. 1C shows a structure that fine electron-emitting material particles 2 having a small particle diameter are contained in a dispersed form, Fig. 1D shows a structure that spherical electron-emitting material particles 2 having projections partly are contained, Fig. 1E shows a structure that electron-emitting material particles 2 having a large number of projections on the outer circumference are contained, and Fig. 1F shows a structure that large electron-emitting material particles 2 having a size close to that of the phosphor particles 1 are contained inside the phosphor particles 1. A structure formed by combining the above structures can also be used.

A content ratio of the electron-emitting material particles 2 to the electroluminescent phosphor as a whole is preferably 0.00001 to 50 weight%, more preferably 0.0001 to 20 weight% and more preferably 0.0001 to 5 weight%. If the content ratio of the electron-emitting material particles 2 is larger than 50 weight%, the phosphor portion which becomes a light emitting section becomes relatively too low and luminous efficiency might be also lowered because of light absorption by the colored electron-emitting material particles 2. If the content ratio of the electron-emitting material particles 2 is less than 0.00001 weight%, the emission of electrons lowers excessively, causing lowering of luminance and an increase in threshold voltage.

The electroluminescent phosphors (shown in Fig. 1A to Fig. 1F) having the structure that the electron-emitting material particles 2 are completely contained in the phosphor particles 1 or a electroluminescent phosphor having a phosphor-coated layer on the outermost layer produced by a third method to be described later may have the electron-emitting material particles 2 having a content ratio of which upper limit is a value (e.g., 99.999%) extremely close to 100 weight%. But, the electroluminescent phosphor having a structure that the electron-emitting material particles 2 are not completely contained in the phosphor particles 1 but partly protruded from the surfaces, or the electroluminescent phosphor (shown in Fig. 2) having a structure that the electron-emitting material particles 2 are included between the phosphor particles 1 in close contact with them, is not desirable to have a content ratio of which upper limit value is close to 100 weight%. Because, when the content ratio is increased, the area of the light emitting phosphor surface decreases even if the light emission from the phosphor is absorbed by a body color of the electron-emitting material particles 2 and the electron-emitting material particles 2 are white or the like, and light absorption does not occur substantially.

The electroluminescent phosphor of the first embodiment is produced by, for example, the following methods.

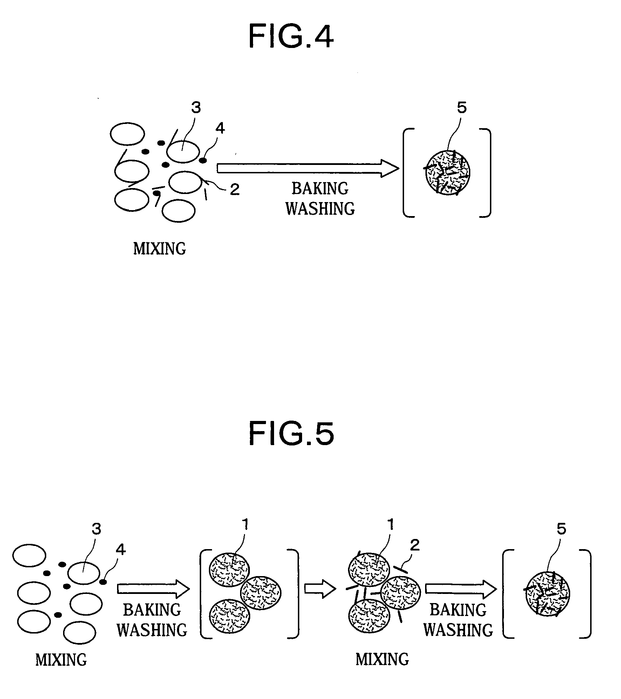

According to a first method, a prescribed amount of electron-emitting material particles 2 is added to a phosphor material composed of a material (hereinafter referred to as the core material) 3 containing elements constituting a host material of a phosphor and a material (hereinafter referred to as the activator raw material) 4 containing elements of an activator as shown in Fig. 4, and, if necessary, a flux (not shown) such as potassium chloride or magnesium chloride is added, and they are wet blended. Specifically, the phosphor material is dispersed into an ion exchange water to prepare slurry. The electron-emitting material particles and the flux are added to the slurry, they are blended by a stirrer, and the obtained slurry is placed into a drying vessel and dried by a drying machine. They may also be dry blended.

The mixture of the phosphor material and the electron-emitting material particles 2 is charged into a heat-resistant container such as a quartz crucible and heated for baking under conditions (an atmosphere, temperature and time) for obtaining a target phosphor. Then, the obtained baked product is washed with ion exchange water (deionized water) or the like, dried and, if necessary, sieved to remove coarse particles. Thus, an electroluminescent phosphor that the electron-emitting material particles 2 are dispersed and contained inside the phosphor particles 1 can be obtained.

If the electron-emitting material disturbs the reaction between the core material 3 and the activator raw material 4, the following production method can be employed.

According to a second method, the core material 3 and the activator raw material 4 are blended. The mixture is heated for baking to obtain the phosphor particles 1, a prescribed amount of the electron-emitting material particles 2 is added to the obtained phosphor particles 1, and they are wet blended and dried or dry blended as shown in Fig. 5.

The mixture is charged into a heat-resistant container such as a quartz crucible and heated again for baking under ordinary conditions for obtaining a phosphor. Then, the obtained baked product is washed and dried. The obtained baked product is washed and dried to obtain the electroluminescent phosphor that the electron-emitting material particles 2 are dispersed and contained inside the phosphor particles 1.

Besides, in the electroluminescent phosphors obtained by the first and second methods, the electron-emitting material particles 2 are not contained completely inside the phosphor particles 1 and may be partly protruded from the surfaces of the phosphor particles 1. The exposed portions of the electron-emitting material particles 2 are not involved in the emission of the phosphor, so that luminous efficiency becomes poor, but according to the following method, the luminous efficiency can be prevented from lowering, and an electroluminescent phosphor having higher luminous efficiency can be obtained.

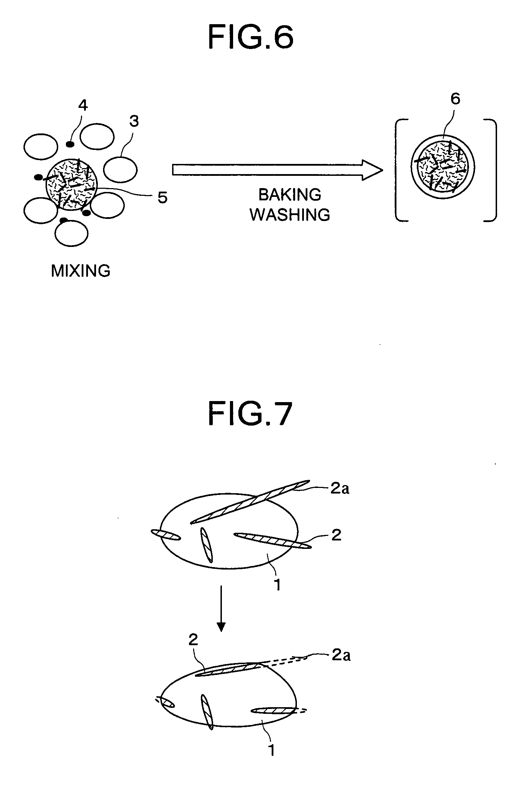

In other words, according to a third method, a core material 3 and an activator raw material 4 are added to and mixed with the electroluminescent phosphor particles 5 obtained by the first method or second method. The mixture is heated for baking. Thus, an electroluminescent phosphor having a coated layer 6 of the phosphor on the outermost layer can be obtained as shown in Fig. 6.

In order to prevent the luminous efficiency from being lowered by the exposure of the above-described electron-emitting material particles, there can be employed a method that a part 2a protruded from the surface of the phosphor particles 1 of the electron-emitting material particles 2 is dissolved with an acid or alkali as shown in Fig. 7.

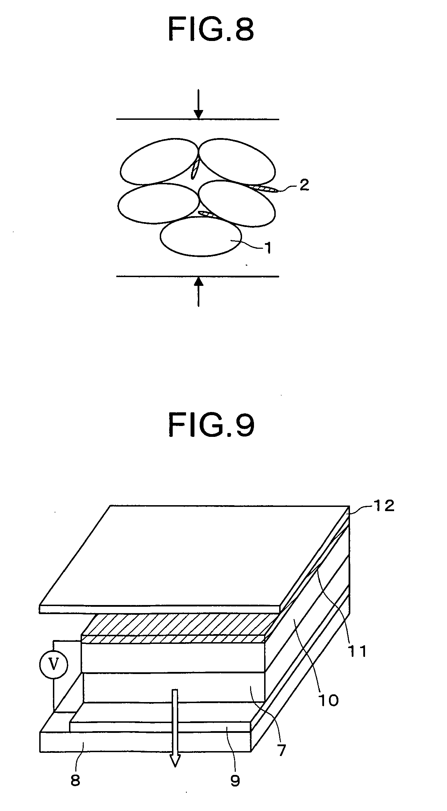

The electroluminescent phosphor of the second embodiment can be produced as follows. Specifically, according to a fourth method, the phosphor particles 1 and the electron-emitting material particles 2 produced by an ordinary method are mixed, and the mixture is undergone pressing at normal temperature or pressing while heating to closely contact the phosphor particles 1 with the electron-emitting material particles 2 contained between them as shown in Fig. 8. Thus, contribution of the electron-emitting material particles 2 to the light emission is enhanced, and an electroluminescent phosphor having good luminous efficiency can be obtained.

In the electroluminescent phosphor of the first and second embodiments produced as described above, the electron-emitting material particles 2 not originating from the core material 3 and the activator raw material 4 are contained inside the phosphor particles 1 or included between the phosphor particles 1 in close contact with them, so that when an alternating electric field is applied, electrons are emitted from the ends of the electron-emitting material particles 2 to excite the contacted phosphors, thereby capable of emitting light efficiently. And, luminous efficiency can be improved in comparison with a conventional phosphor that an electron-emitting substance such as Cu₂S is generated spontaneously.

Then, an electroluminescent element provided with a light emitting layer containing the electroluminescent phosphor produced as described above will be described.

For example, the electroluminescent phosphors of the first and second embodiments are used for the light emitting layer of an organic dispersion type electroluminescent element of the third embodiment.

Fig. 9 shows a monochrome dispersion type electroluminescent element having a light emitting layer 7 that the electroluminescent phosphor of the above-described first or second embodiments is dispersed in an organic high polymer binder (organic dielectric material) having a high dielectric constant such as cyanoethylcellulose.

On one main surface of the light emitting layer 7 is disposed a transparent electrode substrate that a transparent electrode layer 9 such as an ITO film or an SnO₂ film is formed on a transparent substrate 8 such as a glass substrate or a polyester (PET) film by a sputtering method, a CVD method or a printing method. This transparent electrode substrate is disposed such that the transparent electrode layer 9 is contacted with the light emitting layer 7.

On the other main surface of the light emitting layer 7 is formed a dielectric layer 10 which is formed of fine particles having a high dielectric constant such as TiO₂ or barium titanate (BaTiO₃), and a backplate electrode layer 11 which is formed of a metal foil such as an Al foil or a metal film is disposed on it. Besides, a sealing plate 12 is disposed on the backplate electrode layer 11, the whole of them is subjected to, for example, thermocompression bonding, to form an organic dispersion type electroluminescent element. It is not shown in a drawing but it is configured to draw electrodes from the transparent electrode layer 9 and the backplate electrode layer 11, and an AC voltage is applied from the electrodes to the light emitting, layer 7.

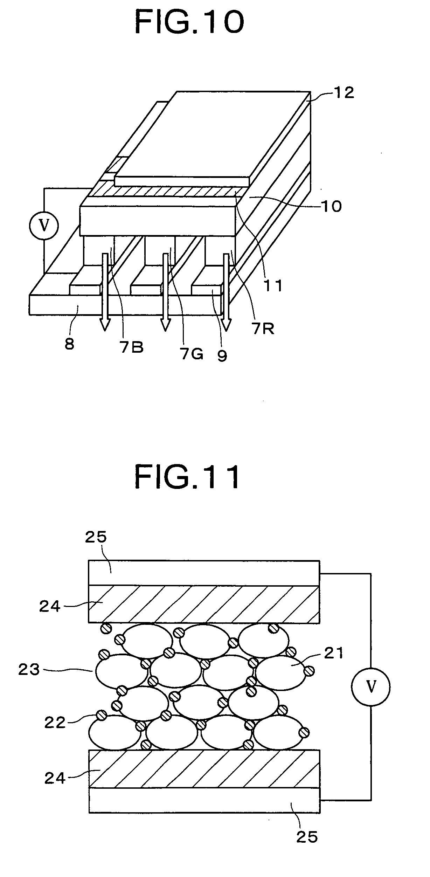

Fig. 10 shows a three-color organic dispersion type electroluminescent element of a fourth embodiment. This dispersion type electroluminescent element has the transparent electrode layer 9 such as an ITO film formed in stripes with a prescribed pitch on the transparent substrate 8. And, the light emitting layer 7, that the electroluminescent phosphor of the above-described embodiment is dispersed in an organic high polymer binder having a high dielectric constant, is formed at a corresponding position on the transparent electrode layer 9 by a printing method or the like. Three color light emitting layers 7B, 7G, 7R of blue, green and red are sequentially arranged repeatedly.

The dielectric layer 10 of fine particles having a high dielectric constant such as barium titanate is formed on the light emitting layers 7, and the backplate electrode layer 11 of a metal foil or film is formed on the dielectric layer 10. The backplate electrode layer 11 is formed in stripes and disposed to intersect with the transparent electrode layer 9 which is a front electrode. Besides, the sealing plate 12 is formed thereon, and the whole of them is subjected to, for example, thermocompression bonding to constitute an organic dispersion type electroluminescent element.

A high voltage is applied between the backplate electrode layer 11 and the transparent electrode layer 9 to emit light. And, the voltage application is controlled by a drive circuit to apply an AC voltage to the light emitting layer 7 at the intersecting positions of the backplate electrode layer 11 and the transparent electrode layer 9. Thus, the light emitting layers 7B, 7G, 7R of blue, green and red are made to emit light independently, whereby a color image can be displayed.

A fifth embodiment of the invention is a dispersion type electroluminescent element and has a structure that a light emitting layer 23 containing phosphor particles 21 and electron-emitting material particles 22 of a conductive compound is sandwiched between two electrode layers 25 with an insulating layer 24 interposed on both surfaces as shown in Fig. 11. The insulating layer 24 may be disposed on only one surface of the light emitting layer 23. A dielectric layer can also be disposed together with the insulating layers 24.

In the electroluminescent element of the fifth embodiment, the electron-emitting material particles 22 are not originating from the electrons constituting the host material of the phosphor contained in the light emitting layer 23 and the activator, disposed in close contact with the outer circumferences of the phosphor particles 21 or filled between the phosphor particles 21 in close contact with them. And, the proportion of the content of the electron-emitting material to the light emitting layer as a whole is in a range of 1 to 75 weight%.

The electron-emitting material particles 22 are not necessarily required to be adhered uniformly to the peripheries of the phosphor particles 21 but may be localized partly or aggregated between the phosphor particles 21. The light emitting layer 23 can be formed by a method that the phosphor particles 21 produced by an ordinary method and the electron-emitting material particles 22 are mixed, the mixture is sandwiched between the electrode layers 25, and the obtained product is subjected to a pressing treatment at normal temperature. A method of alternately laminating a thin layer of the phosphor particles 21 and a thin layer of the electron-emitting material particles 22 can also be employed. A method of adhering the electron-emitting material particles 22 to the peripheries of the phosphor particles 21 by a spray drying method or the like can be used. Conversely, the light emitting layer 23 may be formed by adhering the phosphor particles 21 to the peripheries of the electron-emitting material particles 22.

As the phosphor used in the fifth embodiment, known phosphors can be used. For example, ZnS:Cu or Zn₂SiO₄:Mn showing green emission, ZnS:Ag or BaMgAl₁₀O₁₇: Eu showing high-efficiency blue emission, and Y₂O₂S : Eu or Y₂O₃:Eu showing red emission can be used to satisfy various demands for an emission color, luminance, life, cost and the like..

The phosphor particles 21 have a particle diameter (average particle diameter) of 1 nm to 100 µm, and more preferably 10 nm to 30 µm. If the phosphor particles 21 have an average particle diameter of more than 100 µm, a threshold voltage is increased, and if the average particle diameter is less than 1 nm, the luminous efficiency is lowered considerably.

The electron-emitting material used in the fifth embodiment is composed of a conductive compound having an electric resistivity of 10⁷ Ω•cm or less, preferably 10⁴ Ω•cm or less and more preferably 10° Ω•cm (1 Ω•cm) or less. If the electron-emitting material has an electric resistivity of higher than 10⁷ Ω•cm, it does not have a sufficient electron emission capacity, and it is hard to make the phosphor emit light.

Such a conductive compound includes conductive oxide such as ATO or ITO, and a complex conductive oxide such as titanium oxide (TiO₂) coated with the conductive oxide. And, zinc oxide (ZnO), titanium oxide (TiO₂), copper sulfide (Cu₂S), and the like can also be used. Besides, a blending amount for providing a black body color is limited, but a monolayer type or multilayer type carbon nanotube (CNT) can also be used in a small amount.

The electron-emitting material is not limited to a particular particle shape. It may be a needle-like shape or spherical shape. And, sufficient electron emission can be made regardless of whether or not the outer circumference surface has any fine projection or chipped part.

A content ratio of the electron-emitting material particles 22 is largely variable depending on the used electron-emitting material, phosphor type and particle diameter, but it is desirable that the content in the light emitting layer 23 (phosphor layer) is in a range of 1 to 75 weight%, and more desirably in a range of 5 to 50 weight%. If the content ratio of the electron-emitting material particles 22 is larger than 75 weight%, the phosphor portion which becomes a light emitting section becomes excessively small relatively, so that the luminous efficiency lowers. And, luminous efficiency may be lowered because of light absorption by the colored electron-emitting material particles 22. Conversely, if the content ratio is less than 1 weight%, the electron emission becomes excessively small, and it is not desirable because luminance lowers and a threshold voltage increases.

Besides, in the fifth embodiment, the thickness of the light emitting layer 23 including the phosphor particles 21 and the electron-emitting material particles 22 is an important element to determine the emission luminance and the emission start voltage. It is preferably 1 to 100 times and more preferably 1.5 to 20 times larger than the average particle diameter of the phosphor particles 21. To emit light, the electron-emitting material particles 22 must be between the phosphor particles 21 in a thickness direction that the electric field is applied, and if the light emitting layer 23 is excessively thin, its intervened state is less, and light emission does not occur. If it is excessively thick, the emission start voltage becomes excessively high, and light extraction efficiency lowers. Thus, it is not desirable because luminance lowers.

When the phosphor particles 21 have a smaller average particle diameter, the electron-emitting material particles 22 can be intervened sufficiently without increasing the thickness, so that it can be balanced with the sufficient voltage application to the phosphor. Thus, the emission luminance can be enhanced. But, if the average particle diameter is excessively small, the luminous efficiency of the phosphor itself tends to lower but variable depending on the phosphors. Therefore, an optimum value of the average particle diameter of the phosphor particles 21 is variable depending on the types of the phosphors.

In the electroluminescent element of the fifth embodiment, the light emitting layer 23, which contains the phosphor particles 21, a host material of them and the electron-emitting material particles 22 composed of the conductive compound not originating from the activator, has a structure that it is sandwiched between two electrode layers 25 with the insulating layer 24 intervened. Therefore, when an AC electric field is applied between the electrode layers 25, a detail mechanism is not known but electrons are emitted from some parts (e.g., end portions) of the electron-emitting material particles 22 to excite the nearby phosphor, thereby emitting light. Thus, a variety of phosphors heretofore considered hard to make them emit light can be easily made to emit light by applying the electric field, so that various demands for the device, such as an emission color, luminance, a life, a cost and the like, can be satisfied, and a high-luminance efficiency and high-luminance electroluminescent element can be produced.

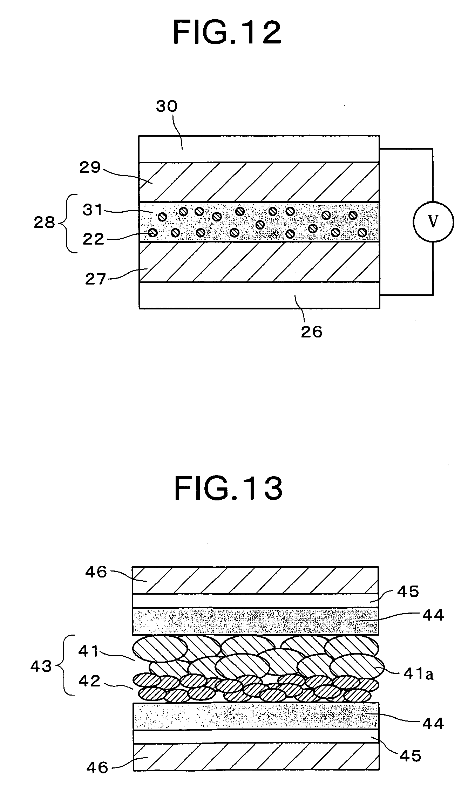

The present invention can be applied to not only the dispersion type electroluminescent element but also can apply the above-described light emitting layer as a thin-film electroluminescent element. Specifically, a sixth embodiment is a thin-film electroluminescent element, and as shown in Fig. 12, has a structure that an ITO transparent electrode layer 26, a first insulating layer 27, a thin-film electroluminescence layer 28, a second insulating layer 29 and a backplate metal electrode layer 30 are sequentially laminated on a glass substrate (not shown). The electroluminescence layer 28 is formed into a thin film, and the electron-emitting material particles 22 composed of the above-described conductive compound are contained in a phosphor layer 31 composed of phosphor particles. The electroluminescent element having such a structure can also provide high luminance at a low voltage.

The structure of the electroluminescent element of the fifth embodiment will be described in further detail with reference to a monochrome dispersion type electroluminescent element.

This electroluminescent element has a transparent electrode substrate disposed on one main surface of a light emitting layer which contains phosphor particles and electron-emitting material particles composed of a conductive compound. The transparent electrode substrate has a structure that a transparent electrode layer such as an ITO film or an SnO₂ film is formed on a transparent substrate such as a glass substrate or a polyester (PET) film by a sputtering method, a CVD method, a printing method or the like, and the transparent electrode layer is disposed in contact with the light emitting layer. A high dielectric constant insulating layer such as cyanoethylcellulose can be intervened between the transparent electrode layer and the light emitting layer.

On the other main surface of the light emitting layer is laminated an insulating dielectric layer which is formed of fine particles having a high dielectric constant such as TiO₂ or barium titanate (BaTiO₃), and a backplate electrode layer which is formed of a metal foil such as an Al foil or a metal film is disposed on it. Besides, a sealing plate is disposed on the backplate electrode layer, the whole of them is subjected to, for example, thermocompression bonding, to form an electroluminescent element. And, it is configured to draw electrodes from the transparent electrode layer and the backplate electrode layer, and an AC voltage is applied from the electrodes to the light emitting layer.

A seventh embodiment of the invention has a structure that a light emitting layer 43 comprising a phosphor layer 41 and an electron-emitting material layer 42 is sandwiched between two electrode layers (e.g., ITO electrode layers) 45 with an insulating layer 44 such as a cyanoethylcellulose layer intervened on both surfaces as shown in Fig. 13. The phosphor layer 41 is formed of phosphor particles 41a. The insulating layer 44 may be disposed on only one surface of the light emitting layer 43 and may be omitted if specified to have a low voltage. And, a dielectric layer can also be disposed together with the insulating layer 44. Reference numeral 46 denotes a substrate such as a glass substrate.

In the electroluminescent element of the seventh embodiment, the electron-emitting material layer 42 is disposed in contact with the phosphor layer 41. On the interface between the electron-emitting material layer 42 and the phosphor layer 41, electrons are emitted from the electron-emitting material to excite the phosphor. It was found from the experiments performed by the inventors that to emit the electrons having enough energy from the electron-emitting material, it was necessary that the electron-emitting material had a prescribed electric resistivity, and the electron-emitting material layer 42 had a prescribed surface shape.

Experiments performed using a variety of materials as the electron-emitting material to check the relation between their characteristics and light emission will be described below. For the experiments, a copper and aluminum-activated zinc sulfide phosphor (ZnS:Cu, Al) having an average particle diameter of 5 µm was used as a phosphor to form a phosphor layer having a thickness of 10 µm. As the electron-emitting material, ITO, ATO, good electric conductors Cu powder and Au film, a conductive ZnO film undergone a conduction treatment with Al or Ga doped, a ZnO film not undergone the conduction treatment and the like were used to produce the electroluminescent element having the structure described in the first embodiment.

A voltage was applied to the obtained electroluminescent element under the same conditions to determine good or not of the light emission and to check its threshold voltage, and comprehensive judgment was made. The results are shown in Table 3. To judge the light emission, symbols A, B, and C were marked sequentially in order of good light emission, and D was marked when light emission was not obtained. The phosphor layer and the electron-emitting material layer were formed by coating the particles, but it was confirmed that the same results can be obtained by a variety of vapor-phase deposition methods such as a vapor deposition method, a sputtering method, a chemical vapor deposition (CVD) method and the like.

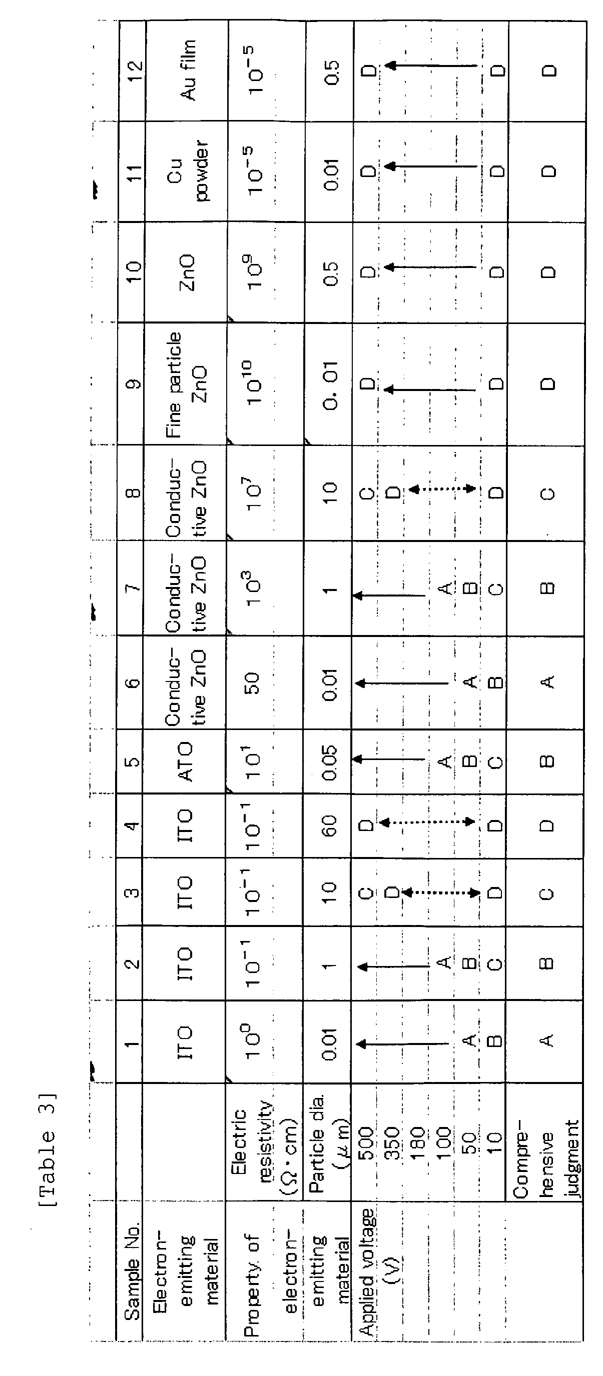

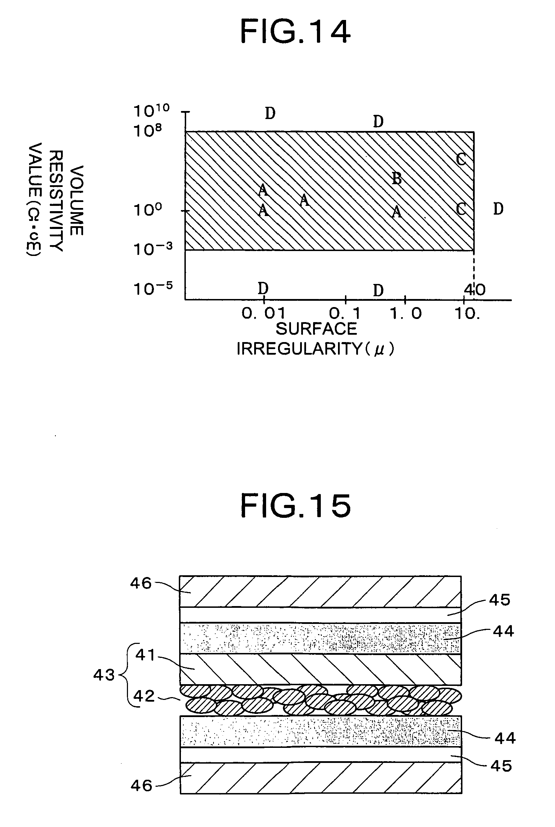

Experimental results were summarized with the surface irregularity of the electron-emitting material layer corresponding to the particle diameter of the electron-emitting material associated with the electric resistivity (volume resistivity) of the electron-emitting material and shown in Fig. 14. The surface irregularities are defined by two times of the depth of a recess and an average value of the pitches of projections. In Fig. 14, A indicates good light emission at an applied voltage of 10 V or less, B indicates light emission at an applied voltage of 100 V or less, C indicates light emission at an applied voltage of about 400 V, and D indicates no light emission even at an applied voltage of 500 V. In Fig. 14, light emission could be confirmed according to the symbols in the range indicated by oblique lines.

The following mechanism of light emission is considered in view of the experimental results. Specifically, it is considered that when an electric field is applied, the concentration of the electric field occurs at the projections of the electron-emitting material layer to emit electrons, and the electrons cause the phosphor to emit light. If the electron-emitting material layer does not have many irregularities, the concentration of the electric field is decreased, and the phosphor does not emit light. Therefore, the electron-emitting material layer needs to have fine surface irregularities having a prescribed size or less. In addition, the electron-emitting material needs to have an electric resistivity (volume resistivity) falling in a prescribed range. If the electric resistivity is too low, energy of the emitted electrons is not enough to cause the phosphor to emit light, and if the electric resistivity is too high, the electrons are not emitted.

Specifically, good light emission can be obtained by using the electron-emitting material that the electron-emitting material layer has a surface irregularity of 40 µm or less, and more preferably 1 µm or less, and the electric resistivity (volume resistivity) is 10⁸ to 10⁻³ Ω•cm.

The usable electron-emitting materials include the ATO, ITO and conductive ZnO used in the experiments and also a complex conductive oxide such as titanium oxide (TiO₂) coated with such a conductive oxide. Conductive titanium oxide (TiO₂), copper sulfide (Cu₂S) and the like can also be used. Besides, a blending amount for providing a black body color is limited, but a monolayer type or a multilayer type carbon nanotube (CNT) can also be used in a small amount.

The electron-emitting material is not limited to a particular particle shape. It may be a needle-like shape or spherical shape. And, sufficient electron emission can be made regardless of whether or not the outer circumference surface has any fine projection or chipped part. As confirmed in the experiments, it is adequate when an electric field equivalent to the surface irregularity of 40 µm or less is concentrated on the electron-emitting material layer.

As a phosphor used in the seventh embodiment of the invention, known phosphors can be used. For example, ZnS:Cu, Al and Zn₂SiO₄:Mn showing green emission, ZnS:Ag, BaMgAl₁₀O₁₇:Eu showing blue emission with high efficiency, Y₂O₂S:Eu and Y₂O₃:Eu showing red emission, or a luminous phosphor such as SrAl₂O₄:Eu, Dy can also be used to satisfy various demands such as an emission color, luminance, life, cost and the like. By using a known low-speed electron beam-exciting phosphor such as ZnO:Zn or an EL phosphor such as ZnS:Mn, far brighter luminance than prior art can be generated.

The phosphor particles have a particle diameter (average particle diameter) of 1 nm to 100 µm and preferably 10 nm to 30 µm. If the phosphor particles have an average particle diameter of exceeding 100 µm, the threshold voltage is increased, and if the average particle diameter is less than 1 nm, the luminous efficiency lowers substantially.

According to the electroluminescent element of the seventh embodiment of the invention, it is considered that the electrons are emitted from the electron-emitting material as described above, and the electrons excite the nearly phosphor to emit light. Therefore, the electroluminescent element of the embodiment is common to a conventional electroluminescent element on the point that the phosphor is held between the electric fields and excited, but the conventional electroluminescent element has an exciting source inside the phosphor, while the electroluminescent element of the embodiment has the electrons mostly excited from outside of the phosphor. Thus, it is considered that the principle of light emission of the invention is quite different from that of the conventional electroluminescent element. To prove it, the conventional dispersion type electroluminescent element has a high dielectric substance such as cyanoethylcellulose mixed around the phosphor, while the embodiment of the invention has an increase in threshold voltage to cause an unfavorable result unless what blocks the electrons is eliminated as much as possible between the electron-emitting material and the phosphor.

It is considered in view of the luminescence mechanism different from the conventional one that the phosphor for CRT such as ZnS:Ag (blue light emission) or Y₂O₂2S:Eu (red light emission) difficult to emit light in the conventional electroluminescent element can make good light emission.

In the above embodiments, the phosphor layer 41 and the electron-emitting material layer 42 are formed in a state of particles, but the phosphor layer can be formed into a thin film by a vapor-phase deposition method such as vapor deposition. As an eighth embodiment, an electroluminescent element having the phosphor layer 41 in a thin film state is shown in Fig. 15. In such a structure, the phosphor layer 41 and the electron-emitting material layer 42 have good adhesiveness, and luminance is also improved.

Besides, in the electroluminescent element having the phosphor layer 41 in the thin film state, as a ninth embodiment, the electron-emitting material layer 42 can be formed into a thin film having a surface irregularity of 40 µm or less as described above by a vapor deposition method, a CVD method or a sputtering method as shown in Fig. 16. In such a structure, the phosphor layer 41 can surely be formed in a state of particles similar to that in the seventh embodiment.

Light emission can be made even when the electron-emitting material and the phosphor particles are mixed. Besides, luminance can be further improved by laminating the light emitting layer having the electron-emitting material and the phosphor particles mixed and the phosphor layer and/or the electron-emitting material layer. Especially, it is effective when the body colors of the electron-emitting material are not many.

In addition, the electroluminescent elements of the above embodiments can decrease a loss of electrons and can improve luminance by forming such an element as a whole into a vacuum vessel. And, influences of moisture and oxygen can be eliminated by the vacuum vessel, and an effect for provision of a long service life is produced.

Specific embodiments of the present invention will be described below.

### Example 1

First, 214.5 g of yttrium oxide (Y₂O₃) as a host material of a phosphor material (the core material), 17.6 g of europium oxide (Eu₂O₃) as an activator raw material, and 2 g of a Cu•Sn powder (indicated by 6-(6) in Table 2) as an electron-emitting material were prepared and wet blended. The mixture was dried. The mixture was charged in a quartz crucible and heated for baking in the atmospher or an inert gas atmosphere at a temperature of 1300°C for three hours. After baking, the baked mixture was washed with deionized water and dried. Thus, a Y₂O₃: Eu phosphor containing the Cu•Sn particles was produced.

The obtained phosphor was mixed with castor oil, and the mixture was sandwiched between two transparent glass electrode plates to produce an element (panel). A prescribed AC voltage having a prescribed frequency was applied to the obtained element, and light emission was observed.

As Comparative Example 1, a Y₂O₃:Eu phosphor produced without adding Cu•Sn powder was used to produce an element. A prescribed AC voltage having a prescribed frequency was applied to the obtained element, but light emission was not observed.

It was confirmed that electroluminescence was caused by containing the Cu•Sn particles within the Y₂O₃:Eu phosphor particles.

### Example 2

To 1000g of zinc sulfide (ZnS) powder as the core material were added 0.68 g of copper sulfate (CuSO₄•5H₂O) as an activator raw material, 10 g of ZnO powder (indicated by 6-(3) in Table 2) as an electron-emitting material and an appropriate amount of deionized water, and they were mixed sufficiently and dried. Then, an appropriate amount of sulfur and activated carbon was added to the mixture if necessary, and the mixture was charged in a quartz crucible and heated for baking in a reducing gas atmosphere, an inert gas atmosphere or a sulfurizing atmosphere. The baking was performed under conditions of 950°C and 90 minutes. After the baking, the baked product was washed with deionized water and dried. Thus, a ZnS:Cu phosphor containing the ZnO particles was produced.

The obtained phosphor was mixed with castor oil, and the mixture was sandwiched between two transparent glass electrode plates to produce an element. A prescribed AC voltage having a prescribed frequency was applied to the obtained element, and light emission was observed.

As Comparative Example 2, a ZnS:Cu phosphor was produced without adding the ZnO powder, and the obtained phosphor was similarly evaluated for luminescence property. As a result, it was found that when the phosphor not containing the ZnO particles of Comparative Example 2 was assumed having an initial luminance of 100, the phosphor containing the ZnO particles of Example 2 had an initial luminance of 142, and the emission luminance was increased considerably.

### Example 3

To 155 g of zinc oxide (ZnO) and 60 g of silicon oxide (SiO₂) as the core materials and 11g of manganese carbonate (MnCO₃) as an activator raw material was added 1.1 g of Cu•Sn powder (indicated by 6- (6) in Table 2) as an electron-emitting material, and they were mixed sufficiently. The mixture was charged in a high purity alumina crucible and heated for baking in a reducing gas atmosphere or an inert gas atmosphere at 1200°C for six hours to obtain a Zn₂SiO₄:Mn phosphor containing. Cu•Sn particles.

The obtained phosphor was mixed with castor oil, and the mixture was sandwiched between two transparent glass electrode plates to produce an element. A prescribed AC voltage having a prescribed frequency was applied to the obtained element, and light emission was observed. The threshold value at that time was 1.1 kV/cm at 20 kHz.

As Comparative Example 3, a Zn₂SiO₄:Mn phosphor produced without adding Cu•Sn powder was used to produce an element. A prescribed AC voltage having a prescribed frequency was applied to the obtained element, and light emission was observed. The threshold value at that time was 1.4 kV/cm at 20 kHz.

Thus, it was found in Example 3 that the threshold value of the electric field lowered substantially and light emission was improved by the addition of the Cu•Sn powder. The lowering of the threshold value of the electric field means that the voltage applied by the electroluminescent element is lowered. Thus, the lowering of the applied voltage provides effects that the pressure resistance of circuit parts can be lowered and the costs of the display device and the like can be reduced as a result.

It was also found that when the initial luminance of the Zn₂SiO₄:Mn phosphor of Comparative Example 3 was assumed to be 100, the initial luminance of the phosphor containing the Cu•Sn particles of Example 3 was 127, indicating that the emission luminance was increased.

### Example 4

A Zn₂SiO₄:Mn phosphor containing Cu•Al powder was produced in the same manner as in Example 3 except that Cu•Al powder indicated by 5-(1) in Table 2 was used as an electron-emitting material. The produced phosphor was used to produce an electroluminescent element (panel). A prescribed AC voltage having a prescribed frequency was applied to the obtained element, and light emission was observed. The initial luminance at that time became 132 and was improved substantially when it was assumed that the Zn₂SiO₄:Mn phosphor (the phosphor obtained in Comparative Example 3) produced without adding the Cu•Al powder had an initial luminance of 100.

### Example 5

A Zn₂SiO₄:Mn phosphor containing Cu particles was produced in the same manner as in Example 3 except that the Cu powder indicated by 4-(2) in Table 2 was used as an electron-emitting material. The produced phosphor was used to produce an electroluminescent element. A prescribed AC voltage having a prescribed frequency was applied to the obtained element, and light emission was observed. The initial luminance at that time became 138 and was improved substantially when it was assumed that the Zn₂SiO₄ : Mn phosphor (Comparative Example 3) produced in the same manner without adding the Cu powder had an initial luminance of 100.

### Example 6

A Zn₂SiO₄: phosphor containing CNT particles was produced in the same manner as in Example 3 except that the CNT powder indicated by 1-(1) in Table 2 was used as an electron-emitting material. The produced phosphor was used to produce an electroluminescent element. A prescribed AC voltage having a prescribed frequency was applied to the obtained element, and light emission was observed. The initial luminance at that time became 146 and was improved substantially when it was assumed that the Zn₂SiO₄:Mn phosphor (Comparative Example 3) produced without adding the CNT powder had an initial luminance of 100.

### Example 7

A Zn₂SiO₄:Mn phosphor was produced in the same manner as in Example 3 except that needle-like conductive titanium oxide powder indicated by 2-(1) in Table 2 was used as an electron-emitting material. The produced phosphor was used to produce an electroluminescent element. A prescribed AC voltage having a prescribed frequency was applied to the obtained element, and light emission was observed. The initial luminance at that time became 124 when it was assumed that the Zn₂SiO₄:Mn phosphor (Comparative Example 3) produced without adding the needle-like conductive titanium oxide powder had an initial luminance of 100.

Thus, it was found that the initial luminance was improved even when a compound having a rather high resistance value such as the needle-like conductive titanium oxide powder was used as the electron-emitting material.

### Example 8

A Zn₂SiO₄:Mn phosphor containing Cu•Sn particles was produced in the same manner as in Example 3. To the produced phosphor were added zinc oxide (ZnO) and silicon oxide (SiO₂) as the phosphor materials and manganese carbonate (MnCO₃), and they were mixed sufficiently. The mixture was heated for baking under the same conditions as those in Example 3 to produce the Zn₂SiO₄:Mn phosphor containing the Cu•Sn particles having a phosphor-coated layer.

The produced phosphor was used to produce an electroluminescent element. A prescribed AC voltage having a prescribed frequency was applied to the obtained element, and light emission was observed. The initial luminance at that time became 131 and was further improved substantially when it was assumed that the electroluminescent element produced in Example 3 had an initial luminance of 100.

### Example 9

To 15.5 g of zinc oxide (ZnO), 6.0 g of silicon oxide (SiO₂) and 1.1 g of manganese carbonate (MnCO₃) was added 1.1 g of Cu•Sn powder (particle diameter of 10 µm) indicated by 6-(6) in Table 2 as an electron-emitting material, and they were mixed sufficiently. The mixture was heated for baking under the same conditions as those in Example 3 to produce a Zn₂SiO₄:Mn phosphor containing Cu•Sn particles.

The produced phosphor was used to produce an electroluminescent element. A prescribed AC voltage having a prescribed frequency was applied to the obtained element, and light emission was observed. The initial luminance at that time became 124 and was improved when it was assumed that the Zn₂SiO₄: Mn phosphor (Comparative Example 3) produced without adding the Cu•Sn powder had an initial luminance of 100.

### Example 10

After 155 g of zinc oxide (ZnO), 60 g of silicon oxide (SiO₂) and 11 g of manganese carbonate (MnCO₃) were mixed sufficiently, the mixture was charged in a high purity alumina crucible and heated for baking in a reducing gas atmosphere or an inert gas atmosphere at 1200°C for six hours to obtain a Zn₂SiO₄:Mn phosphor.

To the obtained phosphor was added 1.1 g of Cu•Sn powder indicated by 6-(6) in Table 2 as an electron-emitting material, they were mixed sufficiently and heated again for baking under the above-described baking conditions to produce a Zn₂SiO₄:Mn phosphor containing Cu•Sn powder. The obtained phosphor was used to produce an electroluminescent element. A prescribed AC voltage having a prescribed frequency was applied to the obtained element, and light emission was observed. The initial luminance at that time became 134 and was improved substantially when it was assumed that the Zn₂SiO₄:Mn phosphor (Comparative Example 3) produced without adding the Cu•Sn powder had an initial luminance of 100.

### Example 11

A Zn₂SiO₄:Mn phosphor containing Cu•Sn particles was produced in the same manner as in Example 3. The produced phosphor was added to 25 weight% of hydrochloric acid, washed while stirring at 80°C for 30 minutes, and washed with ion exchange water six times.

The washed phosphor was used to produce an electroluminescent element, a prescribed AC voltage having a prescribed frequency was applied to the obtained element, and light emission was observed. The initial luminance at that time became 138 when it was assumed that the electroluminescent element produced using the Zn₂SiO₄:Mn phosphor containing Cu•Sn particles of Example 3 had an initial luminance of 100, and the initial luminance was further improved by washing.

### Example 12

After 155 g of zinc oxide (ZnO), 60 g of silicon oxide (SiO₂) and 11g of manganese carbonate (MnCO₃) were mixed sufficiently, the mixture was charged in a high purity alumina crucible, and heated for baking in a reducing gas atmosphere or an inert gas atmosphere at 1200°C for six hours to obtain a Zn₂SiO₄: Mn phosphor. To the obtained phosphor was added 1.1 g of Cu•Sn powder indicated by 6- (6) in Table 2 as an electron-emitting material, they were mixed sufficiently, and the mixture was subjected to a pressing treatment at 100 MPa.

The phosphor undergone the pressing treatment was used to produce an electroluminescent element, and a prescribed AC voltage having a prescribed frequency was applied to the obtained element, and light emission was observed. The initial luminance at that time became 127 and was improved when it was assumed that the Zn₂SiO₄:Mn phosphor (Comparative Example 3) produced without adding the Cu•Sn powder had an initial luminance of 100.

It was found in Example 12 that the electrons emitted from the Cu•Sn particles were effectively used for the light emission of the phosphor, and the luminous efficiency was improved by eliminating the gaps between the phosphor particles by the pressing treatment and containing the Cu•Sn particles as the electron-emitting material between the phosphor particles to increase the adhesiveness with the phosphor particles.

### Example 13

After a Zn₂SiO₄:Mn phosphor was produced in the same manner as in Example 12, 1.1 g of Cu•Sn powder indicated by 6- (6) in Table 2 was added as an electron-emitting material to the obtained phosphor, and they were mixed sufficiently. The mixture was then subjected to a pressing treatment at 100 MPa and also heated at 1000°C for two hours.

Then, the phosphor undergone the pressing and heating treatments was used to produce an electroluminescent element, and a prescribed AC voltage having a prescribed frequency was applied to the obtained element, and light emission was observed. The initial luminance at that time became 133 and was improved substantially when it was assumed that the Zn₂SiO₄:Mn phosphor (Comparative Example 3) produced without adding the Cu•Sn powder had an initial luminance of 100.

It was found in Example 13 that heating performed in addition to the pressing treatment could eliminate the gaps between the phosphor particles more than when only the pressing treatment was performed, and could increase adhesiveness with the phosphor particles by including the electron-emitting material between the phosphor particles, thereby capable of providing an electroluminescent phosphor with luminous efficiency improved.

### Example 14

The electron-emitting material particles having a particle diameter (average particle diameter) and shape shown in Table 4 were added to and mixed with a copper and aluminum-activated zinc sulfide phosphor (ZnS:Cu, Al; average particle diameter of 5 µm) at the ratio indicated in the same table, and the mixture was sandwiched between two electrode layers to form a light emitting layer (thickness of 20 µm). Thus, the electroluminescent element shown in Fig. 11 was formed. Then, an AC electric field having a frequency of 1 kHz was applied between the electrode layers, and the light emission of the light emitting layer was visually checked while increasing the applied voltage. The results are shown in Table 4.

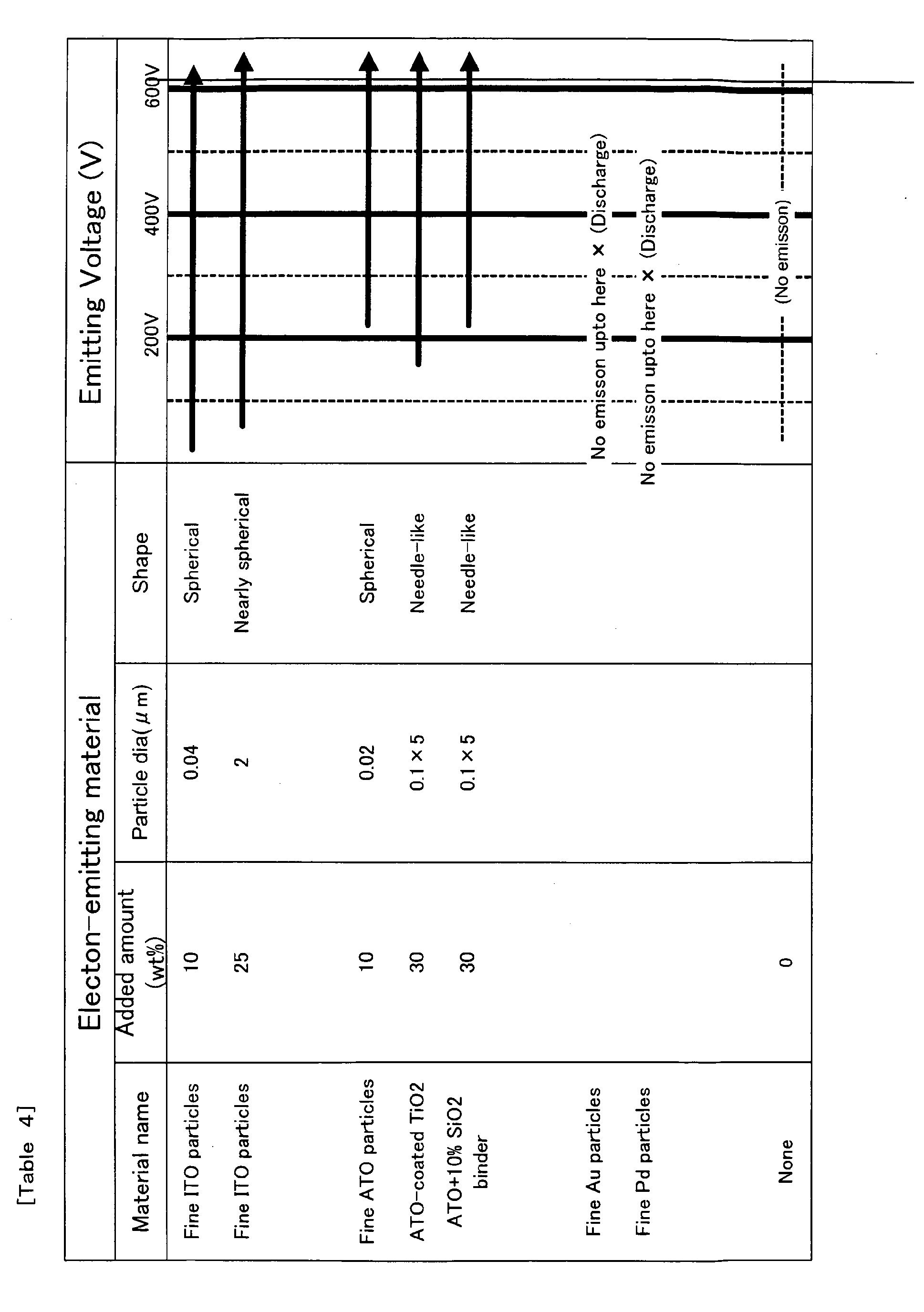

It was confirmed from the table as follows. A conductive oxide such as ITO or ATO or a complex conductive oxide such as titanium oxide (TiO₂) coated with such a conductive oxide was used as an electron-emitting material. Fine particles formed of such materials mixed at a prescribed ratio with respect to the phosphor. It was found that the emission start voltage was low, and good light emission was provided. It was also found that the emission start voltage became lower when the electron-emitting material particles had a needle-like shape, but sufficient light emission was provided even if the particles were spherical. Besides, where fine metal particles of Au or Pd were solely mixed with the phosphor, only weak light emission was checked under prescribed experiment conditions (applied voltage), and when the voltage was high, a discharge occurred, and stable light emission was not provided. The light emitting layer (phosphor layer) mixed with a metal having good conductivity has a considerably low electric resistivity and its pressure resistance capacity is deteriorated. Therefore, a discharge tends to occur. As a result, the phosphor can be made to emit light at high luminance stably.

### Example 15

A transparent electrode layer of ITO was formed on one surface of a glass substrate, and an insulating film (thickness of 10 µm) of cyanoethylcellulose was formed thereon by a dipping method. Thus, two transparent glass electrode plate were prepared. To 100 g of copper and aluminum-activated zinc sulfide (ZnS:Cu, Al) phosphor having an average particle diameter of 5 µm was added 10 g of ethanol dispersion liquid (solid content of 10 weight%) containing fine ITO particles having an average particle diameter of 20 nm, they were mixed, and the mixture was heated to 100°C to volatilize the solvent and to dry. Thus, a luminescent material was prepared.

The obtained luminescent material was coated onto the insulating layer of the above-described transparent glass electrode plate by a spray drying method to form a light emitting layer having a thickness of 28 µm, another transparent glass electrode plate was placed on it, the prepared layers were sandwiched between two transparent glass electrode plates to produce a device (electroluminescence panel).

An AC voltage of a frequency of 1 kHz was applied to the obtained device. The emission of green light was observed. The voltage (the emission start voltage) that made the light emission recognizable was 40V, and luminance was measured by a luminance meter (BM5 of Topcon Corporation). And, the emission of green light of 200 cd•m² was observed at 200V.

### Example 16

To 100 g of a copper and aluminum-activated zinc sulfide (ZnS:Cu, Al) phosphor having an average particle diameter of 0.1 µm was added 20 g of a dispersion liquid (solid content of 10 weight%) containing fine ITO particles having an average particle diameter of 20 nm, they were mixed, and the mixture was heated to 100°C to volatilize the solvent and to dry. Thus, a luminescent material was prepared.

The obtained luminescent material was sandwiched between two transparent glass electrode plates in the same manner as in Example 15 to form a light emitting layer having a thickness of 1 µm. Thus, a device (electroluminescence panel) was produced.

An AC voltage of a frequency of 1 kHz was applied to the obtained device, and the emission of green light was observed. The voltage (the emission start voltage) that made the light emission recognizable was 40V, and the emission of green light of 400 cd•m² was observed at 200V.

### Example 17

A luminescent material was prepared in the same manner as in Example 15 except that a silver and aluminum-activated zinc sulfide (ZnS:Ag, Al) phosphor having an average particle diameter of 5 µm was used instead of the copper and aluminum-activated zinc sulfide (ZnS:Cu, Al) phosphor having an average particle diameter of 5 µm. The prepared material was used to produce a device (electroluminescence panel).

An AC voltage of a frequency of 1 kHz was applied to the obtained device, and the emission of blue light was observed. The voltage (the emission start voltage) that made the light emission recognizable was 40V, and the emission of blue light of 50 cd•m² was observed at 200V.

### Example 18

A luminescent material was prepared in the same manner as in Example 15 except that a Y₂O₂S: Eu phosphor having an average particle diameter of 5 µm was used instead of the ZnS:Cu, Al phosphor having an average particle diameter of 3 µm. The prepared material was used to produce a device (electroluminescence panel).

An AC voltage of a frequency of 1 kHz was applied to the obtained device, and the emission of red light was observed. The voltage (the emission start voltage) that made the light emission recognizable was 60V, and the emission of red light of 100 cd•m² was observed at 200V.

### Example 19

A luminescent material was prepared in the same manner as in Example 15 except that fine titanium oxide (TiO₂) particles (ET-300W of ISHIHARA SANGYO KAISHA, LTD.) of which surfaces were coated with ATO were used instead of the dispersion liquid (solid content of 10 weight%) containing fine ITO particles. The prepared material was used to produce a device (electroluminescence panel).

An AC voltage of a frequency of 1 kHz was applied to the obtained device, and the emission of green light was observed. The voltage (the emission start voltage) that made the light emission recognizable was 60V, and the emission of green light of 150 cd•m² was observed at 200V.

### Example 20

A one weight% polyisocyanate solution was coated onto a glass substrate having a conductive film (transparent electrode layer) of ITO formed on its one surface and dried to form an insulating film (thickness of 10 µm). Two such transparent glass electrode plates were prepared. Then, an ethanol dispersion liquid containing fine ITO particles (average particle diameter of 0.01 µm) was used to form an electron-emitting material layer of ITO by a precipitation method on one insulating film of the transparent glass electrode plate. The concentration of the ethanol dispersion liquid was adjusted to control the thisckness of the ITO layer to 10 µm.

Then, a phosphor layer having a thickness of 10 µm was formed on the ITO layer by a precipitation method using an ethanol dispersion liquid of a copper and aluminum-activated zinc sulfide phosphor (ZnS:Cu, Al) (average particle diameter of 5 µm, for CRT). Besides, another transparent glass electrode plate was placed on it such that the insulating film came into contact with it, to complete an element.

An AC electric field having a frequency of 1 kHz was applied between both transparent electrodes of the obtained element, and the light emission was visually checked while increasing the applied voltage gradually. The results are shown in Table 5 (Sample No. 1 in Example 20). The emission of light was observed at an applied voltage of 10V, and good brightness was observed at 50V.

### Example 21

Electron-emitting material ITOs having average particle diameters of 1 µm, 10 µm and 60 µm each were used to produce elements in the same manner as in Example 20. An AC voltage of a frequency of 1 kHz was applied to the obtained elements in the same manner as in Example 20, and the light emission was visually checked. The results are shown in Table 5 (Sample Nos. 2 to 4 in Example 21). It was confirmed that a threshold voltage (the emission start voltage) was higher than in Example 20 excepting the sample No. 4 of which ITO had an average particle diameter of 60 µm, but the light emission could be observed.

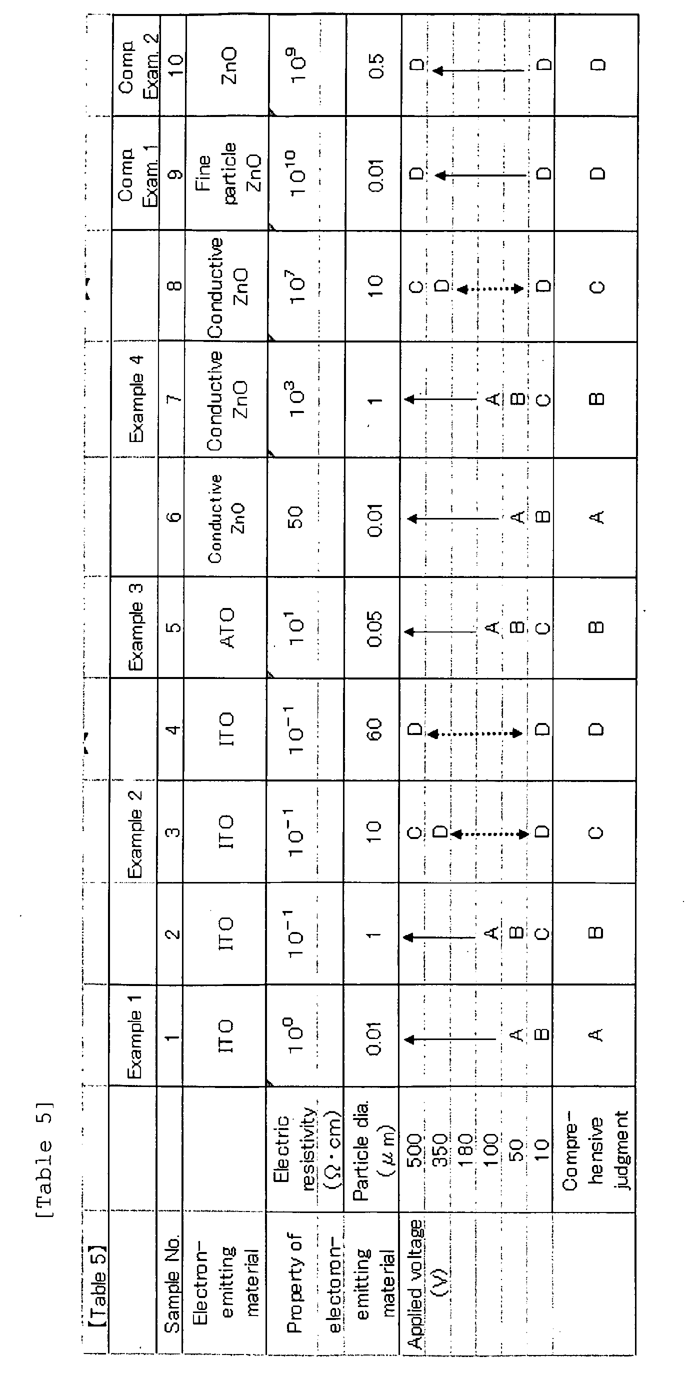

### Example 22

An element was produced in the same manner as in Example 20 except that fine ATO particles having an average particle diameter of 0.05 µm were used as an electron-emitting material instead of the fine ITO particles having an average particle diameter of 0.01 µm.

An AC voltage of a frequency of 1 kHz was applied to the obtained element in the same manner as in Example 20, and the light emission was visually checked. As a result, good light emission was observed as indicated as sample No. 5 in Table 5. Example 23 and Comparative Examples 4 and 5

As electron-emitting materials, elements were produced in the same manner as in Example 20 except that conductive ZnO particles having an average particle diameter of 0.01 µm (sample No. 6), 1 µm (sample No. 7) and 10 µm (sample No. 8) that A1 was doped were used instead of the fine ITO particles. As Comparative Examples 4 and 5, elements were produced in the same manner using ZnO particles having average particle diameters of 0.01 µm (sample No. 9) and 0.5 µm (sample No. 10) and not providing conductivity.

An AC voltage of a frequency of 1 kHz was applied to the obtained element in the same manner as in Example 20, and the light emission was visually checked. As a result, according to the Example 23, the light emission having the same tendency as that in the case, that the ITOs corresponding to the individual particle diameters were used, could be confirmed as shown in Table 5. In comparison with the case that the ITOs were used, the element could be produced at a cost lowered to 1/3. Where the elements of Comparative Examples 4 and 5 were used, no light emission could be observed.

### Example 24

A light emitting layer was formed in the same manner as in Example 20 except that a barium titanate film was formed as an insulating film by a sol-gel method. An inorganic type adhesive was coated onto the peripheral edges of two transparent glass electrode plates, and sealing was performed in vacuum of 10-4 Torr/cc to produce a vacuum cell.

An AC electric field having a frequency of 1 kHz was applied between electrode terminals which were taken out of the produced cell, the emission start voltage and emitting state were checked while increasing the applied voltage gradually, and about two times of emission luminance was observed in comparison with the case that the cell interior was not vacuumized. The emission lifetime could also be extended to five times or more.

### Example 25

As a phosphor layer, a vapor-deposited film of a manganese-activated zinc sulfide phosphor (ZnS:Mn) was formed. Specifically, an electron-emitting material layer of ITO was formed in the same manner as in Example 20, and a ZnS:Mn phosphor layer having a thickness of 2 µm was formed thereon by an EB evaporation method. Other processes were performed in the same manner as in Example 20 to produce an element.

An AC voltage of a frequency of 1 kHz was applied to the obtained element in the same manner as in Example 20, and the light emission was visually checked. Emission of bright orange light was observed even at a low voltage of 10V.

### INDUSTRIAL APPLICABILITY

According to the electroluminescent phosphor of the invention, the particles of the electron-emitting material not originating from the atoms constituting the host material of the phosphor and the activator are contained inside the phosphor particles or included between the phosphor particles in close contact with them, and luminous efficiency can be improved in comparison with, for example, a conventional phosphor that Cu₂S is formed spontaneously.

And, the host material of the phosphor is not limited, various electron-emitting materials can be selected, and such electron-emitting materials can be included at a high concentration, so that various demands for the device, such as an emission color, luminance, a life, a cost and the like, can be satisfied, and an electroluminescent phosphor having high luminous efficiency, good chromaticity and long life can be obtained. Besides, this phosphor can be used to form the light emitting layer, so that a high-luminance efficiency and high-luminance dispersion type electroluminescent element can be produced.

In addition, according to the electroluminescent element of the invention, the phosphor is not limited to the ZnS-based materials, and the phosphor which was conventionally considered hard to make it emit light can be made to emit light easily by applying an electric field. Therefore, various demands for the device, such as an emission color, luminance, life, cost and the like, can be satisfied, and a high-luminance efficiency and high-luminance electroluminescent element can be realized. And, the invention can also be applied to not only a dispersion type but also a thin-film electroluminescent element, and high luminance can be realized at a lower voltage. Accordingly, the invention can be applied to wide applications such as a display device, the backlight of a liquid crystal display device, lighting and the like.

## Claims

1. An electroluminescent phosphor, comprising phosphor particles and electron-emitting material particles,
wherein the electron-emitting material particles are not originating from atoms constituting the host material of the phosphor and an activator, and the electron-emitting material particles are contained inside the phosphor particles or included between the phosphor particles in close contact with them.

2. The electroluminescent phosphor according to claim 1, wherein the electron-emitting material has an electric resistivity of 10⁷ Ω•cm or less.

3. The electroluminescent phosphor according to claim 1 or 2, wherein the electron-emitting material particles have an aspect ratio (L/D) of 1.5 or more, the aspect ratio (L/D) being a ratio of a major axis (L) and a minor axis (D).

4. The electroluminescent phosphor according to any one of claims 1 to 3, wherein the electron-emitting material particles have a particle diameter which does not exceed the particle diameter of the phosphor particles.

5. The electroluminescent phosphor according to any one of claims 1 to 4, wherein a content ratio of the electron-emitting material particles to the phosphor particles is 0.00001 to 50 weight%.

6. A method for manufacturing an electroluminescent phosphor, comprising:
mixing a phosphor material including elements constituting the host material of a phosphor and an activator or a compound containing the elements and electron-emitting material particles; and
baking the prepared mixture by heating to yield an electroluminescent phosphor comprising phosphor particles and the electron-emitting material particles contained in the phosphor particles.

7. A method for manufacturing an electroluminescent phosphor, comprising:
mixing a phosphor material including elements constituting the host material of a phosphor and an activator or a compound containing the elements, and heating for baking the mixture to prepare phosphor particles;
mixing the phosphor particles prepared in the previous step with electron-emitting material particles; and
baking the mixture prepared in the previous mixing step by heating to produce an electroluminescent phosphor comprising the phosphor particles and the electron-emitting material particles contained in the phosphor particles.

8. The method for manufacturing an electroluminescent phosphor according to claim 6 or 7, further comprising mixing and heating the electroluminescent phosphor produced in the baking step and the phosphor material to bake the mixture.

9. A method for manufacturing an electroluminescent phosphor, comprising:
mixing a phosphor material including elements constituting a host material of a phosphor and an activator or a compound containing the elements, and heating for baking the mixture to prepare phosphor particles;
mixing the phosphor particles prepared in the previous step and electron-emitting material particles; and
pressing the mixture prepared in the mixing step at normal temperature or while heating to closely contact the phosphor particles with the electron-emitting material particles included between phosphor particles.

10. An electroluminescent element, comprising a light emitting layer containing the electroluminescent phosphor according to any one of claims 1 to 5.

11. The electroluminescent element according to claim 10, comprising a light emitting layer having the electroluminescent phosphor dispersed into a dielectric matrix, a transparent electrode layer which is disposed on one main surface of the light emitting layer, and a backplate electrode layer which is disposed on the other main surface of the light emitting layer with a dielectric layer therebetween.

12. An electroluminescent element, comprising:
a light emitting layer including phosphor particles and electron-emitting material particles not originating from atoms constituting the host material of the phosphor and an activator,
wherein the electron-emitting material comprises a conductive compound, and a content ratio of the electron-emitting material in the light emitting layer is 1 to 75 weight%.

13. The electroluminescent element according to claim 12, comprising a transparent electrode layer which is disposed on one main surface of the light emitting layer and a backplate electrode layer which is disposed on the other main surface of the light emitting layer with a dielectric layer therebetween.

14. The electroluminescent element according to claim 12 or 13, wherein the electron-emitting material has an electric resistivity of 10⁷ Ω•cm or less.

15. The electroluminescent element according to any one of claims 12 to 14, wherein the electron-emitting material particles are fine particles including ITO (Indium Tin Oxide) as a main component.

16. The electroluminescent element according to any one of claims 12 to 14, wherein the electron-emitting material particles are fine particles including ATO (Antimony Tin Oxide) as a main component.

17. An electroluminescent element, comprising:
a light emitting layer;
first and second electrode layers which are disposed on both surfaces of the light emitting layer; and
an apparatus for applying an electric field between the electrode layers,
wherein the light emitting layer is formed of lamination of a phosphor layer of at least one layer and an electron emission source layer of at least one layer including an electron-emitting material not originating from the atoms constituting the host material of the phosphor and an activator.

18. The electroluminescent element according to claim 17, wherein an insulating layer is disposed between at least one of the first and second electrode layers and the light emitting layer.

19. The electroluminescent element according to claim 17 or 18, wherein the electron-emitting material has an electric resistivity of 10⁻³ to 10⁸ Ω•cm, and an electron emission source layer containing the electron-emitting material has a surface irregularity of 40 µm or less.

20. The electroluminescent element according to any one of claims 17 to 19, wherein the electron-emitting material is fine particles which have at least one type selected from ITO (Indium Tin Oxide), ATO (Antimony Tin Oxide) and conductive ZnO as a main component or such fine particles coated with an insulating material.

21. The electroluminescent element according to any one of claims 17 to 19, wherein the electron emission source layer is a thin film which has at least one type selected from ITO, ATO and conductive ZnO as a main component and has a surface irregularity.
